# EUROPEAN PATENT SPECIFICATION

(11) **EP 0 513 051 B1**
(45) Date of publication and mention of the grant of the patent: **28.12.1994**
(21) Application number: 91902648.4
(22) Date of filing: 30.01.1991
(51) Int. Cl.: C10B 53/00

(54) **METHOD AND APPARATUS FOR A CIRCULATING BED TRANSPORT FAST PYROLYSIS REACTOR SYSTEM**
VERFAHREN UND VORRICHTUNG FÜR SCHNELLE PYROLYSE IN EINER ANLAGE MIT ZIRKULIERENDER WIRBELSCHICHT
PROCEDE ET APPAREIL POUR UN REACTEUR DE PYROLYSE RAPIDE A LIT CIRCULANT

(30) Priority: 31.01.1990 CA 2009021
(43) Date of publication of application: 19.11.1992
(73) Proprietor: ENSYN TECHNOLOGIES, INC., Greely, Ontario KOA 1ZO (CA)
(72) Inventor: FREEL, Barry, A., Ottawa, Ontario K1T 3N4 (CA); GRAHAM, Robert, G., Nepean, Ontario K2J 2J6 (CA)
(74) Representative: Enskat, Michael Antony Frank
(86) International application number: CA9100022
(87) International publication number: WO9111499

(56) References cited:
- US-A- 4 083 751
- US-A- 4 153 514

## Description

This invention generally relates to a new method and apparatus for the fast pyrolysis of carbonaceous materials involving rapid mixing, high heat transfer rates, precisely controlled short uniform residence times and rapid primary product quench in an upflow, entrained-bed, transport reactor with heat carrier solids recirculation.

### BACKGROUND OF THE INVENTION

The processing of carbonaceous feedstocks to produce heat, chemicals or fuels can be accomplished by a number of thermochemical processes. Conventional thermochemical processes, such as combustion, gasification, liquefaction, and conventional pyrolysis are typically equilibrium processes and yield relatively low-value equilibrium products including major quantities of non-reactive solids (char, coke, etc.), secondary liquids (heavy tars, aqueous solutions, etc.), and non-condensible gases (CO₂, CO, CH₄, etc.). For example, combustion is restricted to immediate thermal applications, and gasification normally produces low energy fuel gas with limited uses. Liquefaction and conventional pyrolysis often produce low yields of valuable liquid or gaseous products. In addition the liquid products which are produced often require considerable secondary upgrading.

Pyrolysis is characterized by the thermal decomposition of materials in the relative absence of oxygen (i.e., significantly less oxygen than required for complete combustion). Typically, pyrolysis has historically referred only to slow conventional pyrolysis whose equilibrium products included roughly equal proportions of non-reactive solids (char and ash), secondly liquids, and non-condensible gases.

However, over the past two decades fundamental pyrolysis research has unexpectedly indicated that high yields of primary, non-equilibrium liquids (including valuable chemicals, chemical intermediates, petrochemicals and fuels) could be obtained from carbonaceous feedstocks through fast (rapid or flash) pyrolysis at the expense of undesirable, slow pyrolysis products. In other words, the low-value product distribution of traditional slow pyrolysis can be avoided by the approach embodied by fast pyrolysis processes.

Fast pyrolysis is a generic term that encompasses various methods of rapidly imparting a relatively high temperature to feedstocks for a very short time, then rapidly reducing the temperature of the primary products before chemical equilibrium can occur. By this approach the complex structures of carbonaceous feedstocks are broken into reactive chemical fragments which are initially formed by depolymerization and volatilization reactions, but do not persist for any significant length of time. Thus, non-equilibrium products are preserved, and valuable, reactive chemicals, chemical intermediates, light primary organic liquids, specialty chemicals, petrochemicals, and/or high quality fuel gases can be selected and maximized at the expense of the low-value solids (char, coke, etc.), and heavy secondary organic liquids (tars, creosotes, etc.).

Fast pyrolysis is an intense, short duration process that can be carried out in a variety of reactor systems. The common aspect of these reactors is the ability to achieve extremely rapid feedstock heating with limitation of the reaction to relatively short times by rapid cooling which stops the chemical reactions before the valuable intermediates can degrade to non-reactive, low-value final products. A fast pyrolysis process reactor system must therefore be characterized by the following requirements:
1) A very rapid feedstock heating rate. Typically the heating rate lies within the range of 1,000 to 1,000,000°C per second.
2) A controlled, elevated reaction temperature. Typically the reaction temperature lies within the range of 350 to 800°C.
3) A controlled, short reaction/residence time. Typically the residence time lies within the range of 30 ms to 2 seconds.
4) A rapid product quench. Typically the products are quickly cooled below 350°C within 0.5 seconds.

For certain high value chemical products, (chemicals, specialty chemicals, and petrochemicals), the process is enhanced and optimized by the achievement of the following additional requirements:
1) Ablation of the reacting particles. That is, a physical/mechanical mechanism that removes the primary depolymerization liquids from the reacting surface at a surface regression rate that is consistent with the thermal penetration rate. In effect, at an infinitesimal distance below the retreating reaction surface, the temperature remains far below the reaction temperature and very limited depolymerization reactions occur.
2) Minimal back mixing within the reactor. That is, there is very minimal internal recirculation (eddies) of the reactant, carrier gas, products or heat carrier solids within the reacting zone.
3) Precise control of a uniform short reactor residence time. This implies that the average residence time not only be short but that there be very limited or no residence time distribution about this average.

In addition, a practical, economical, commercial process requires:
1) Relatively high yields of the desirable products;
2) Scalability of the process to industrial size reactors;
3) Industrially practical operation (reasonable energy requirements, durability, process controllability, etc.).

### REVIEW OF PYROLYSIS PROCESSES

Four basic types of reactor systems have been investigated as to their applicability to fast pyrolysis process development. These include; fluidized-bed reactor, transport reactor, cyclonic reactor and vacuum pyrolysis reactors.

### Fluidized-beds

Although a fluidized-bed achieves rapid heating rates and a controlled elevated temperature, it is limited by a relatively long average residence time that is beyond the optimal levels for maximum yields of liquids and certain valuable chemicals and petrochemicals. Extensive back-mixing is inherent in this type of fluidized-bed and contributes to a broad residence time distribution and poor control of product selectivity.

Progress in the fast pyrolysis of coal led to the application of shallow bubbling fluidized-beds to reduce the average residence time and thereby more closely approach maximum yields of liquids, petrochemicals and valuable chemicals.

This reactor system fulfils the requirement of rapid heating rate, controlled elevated temperature, and relatively short average residence time; however, a major limitation of the shallow bubbling fluidized-bed reactor, centres on the inability to effectively achieve economical scale-up to industrial applications. While a fluidized-bed can be scaled-up, the requirement for acceptable fluidization properties requires a corresponding scale-up of the bed depth which does not allow the specific short average residence time to be maintained. Another major limitation of the shallow bubbling fluidized-bed is that the minimum average residence time possible can be no less than about 0.5 seconds.

Secondary factors also constrain the achievement of optimum fast-pyrolysis conditions. Very limited ablation occurs in the shallow bubbling bed, and back-mixing, while considerably reduced from that inherent in a deep fluidized-bed, is still sufficient to produce a significant residence time distribution.

### Transport Reactors

Four general types of transport reactors have been applied to the fast pyrolysis of carbonaceous feedstocks. They are defined according to the nature of the transporting medium which can be gas or gas plus solids and by the direction of flow through the reactor, which can be upflow or downflow. The majority of transport reactors in more advanced levels of scale-up or commercialization typically employ a gas stream only to transfer heat to the reactants.

Major drawbacks associated with these reactor systems include; poor mixing of feedstock and heat carrier, essentially no particle ablation, and poor heat transfer to the reacting particles.

Poor heat transfer and limited ablation result from the use of only a gas as the conveying and heat transfer medium. In addition, the poor heat transfer limitations of the upflow transport gas reactor system precludes operating at the very short residence times required for optimizing yields of total liquids, petrochemicals and desirable chemical products.

Studies have also been conducted utilizing a variety of laboratory-scale downflow reactors with a gas transport medium. For example, sawdust feedstock and a one-inch diameter reactor have been used with operating temperatures in the range of 300 - 1000°C, a residence time of 0.5 - 10 seconds, and a heating rate of 1000°C/s. Liquid yields in these experiments were very low as the objective was to maximise hydrocarbon gases.

All of the drawbacks previously mentioned for the upflow reactor systems also apply to this reactor configuration, which limits potential for achieving high total liquid yields and selective yields of petrochemicals and valuable chemicals.

To improve heat transfer in transport reactors, a solid heat carrier has been utilized. Fast pyrolysis of biomass has been conducted in both upflow and downflow reactors ranging in size from bench-scale to commercial demonstration, employing hot glowing char to carry and transfer heat.

US Patent No. 4 153 514 discloses a pyrolysis process for recovering chemical values from waste material containing organic solids, which process involves forming a turbulent gaseous stream consisting of carrier gas, particulate solid waste materials and a hot char (organic) heat carrier. The gaseous stream is passed through a pyrolysis zone under turbulent flow conditions. The effluent from the pyrolysis zone is cooled before separation from the particulate heat carrier.

US Patent No. 4 083 751 describes a pyrolysis reactor for decomposing solid organic waste materials by heating the materials with a fast fluidized particulate source of heat which are admitted to one end of a chamber through first and second inlet pipes. The products of decomposition together with the particulate source of heat are removed through an outlet pipe at the other end of the chamber without any separation.

More recently, a Rapid Thermal Process (RTP), downflow, tubular reactor has been developed as described in Canadian Patent Application 536,549 which overcomes many of the drawbacks associated with the transport reactors discussed above. This system makes use of an inert or catalytic solid particulate heat carrier to carry and transfer heat to the process.

This reactor configuration provides an extremely rapid heating rate and excellent particle ablation as a result of direct turbulent contact between the heat carrier solids and the particulate reactants. The utilization of a tubular downflow section after the separate rapid mixer ensures minimal back-mixing and allows precise control of a broad range of very short, uniform residence times with minimal residence time distribution.

One drawback associated with this reactor configuration is the lack of a practical process to recirculate the particulate solid heat carrier from the base of the reactor up to the mixer.

### Cyclonic Reactors

An alternative approach to achieving extremely high heat transfer rates, excellent particle ablation and minimal back-mixing involves a cyclonic or vortex tube reactor in which rapidly moving feedstock particles are forced into direct intimate continuous contact with the hot reactor wall.

The wall sweeps the primary depolymerization liquids from the reacting surface where they are immediately vaporized and carried to a quenching unit. This approach permits excellent control of a very short, and uniform residence time. Laboratory-scale and process development units have been operated on biomass feedstocks in the temperature range of 400-900°C.

On a small scale, this reactor configuration meets most of the requirements for effective rapid pyrolysis. However, the potential for commercial application is minimal because of the inherent limitation of heat transfer rate through a reactor wall, extreme complexity associated with scale-up, and the general absence of commercial application of these reactors in the chemical process industries.

### Vacuum Pyrolysis

Vacuum pyrolysis is a special case of fast pyrolysis. The very rapid heat transfer typically associated with the previously noted fast pyrolysis process is not required since operation under vacuum ensures that primary depolymerization liquids at the surface of the reacting particles are rapidly drawn from the surface and removed from the reaction zone before they degrade to less valuable secondary products (char, heavy tar, non-condensible gases).

Although relatively high liquid yields have been realized and the reactor configuration allows selective withdrawal of specific product fractions, there are obstacles associated with commercial implementation. The most serious of these are heat transfer limitations, the inherent difficulty associated with scale-up of vacuum processes, the potential for inadequate solids flow, and the general lack of demonstrated chemical conversion vacuum processes on an industrial scale.

None of the above reactors meet all of the requirements for a commercial fast pyrolysis reactor, especially in so far a the requirement of scaling up the reactor to commercial size.

### SUMMARY OF THE INVENTION

The present invention comprises a process and apparatus for achieving efficient, rapid, practical thermal and\or catalytic processing of carbonaceous feedstocks. A distinct, turbulent, mixing zone achieves extremely rapid, effective mixing of a particulate feedstock with a solid particulate heat carrier and a non-oxidative transport gas. Direct turbulent contact between the solid heat carrier and the feedstock provides very high heat transfer rates and effective particle ablation which are essential for depolymerization and devolatilization reactions that provide maximum total liquid yields.

This invention generally relates to a new method and apparatus for the fast thermal processing (such as fast pyrolysis, rapid cracking) of carbonaceous materials (feedstock) involving rapid mixing and heat transfer in a novel reactor design. The heat is transferred to the feedstock from hot particulate solids which are accelerated and then injected into the reactor through one or several streams, and impinge on one or several feedstock streams. The mixing section therefore combines the hot particulate solids and carbonaceous feedstock in a dense turbulent central stream in the mixing zone. Solids are accelerated at the base of and throughout the mixing zone to enhance turbulence and mixing.

An upflow transport reactor section above the mixer provides minimal back-mixing and ensures a very short, controlled, uniform residence time which is essential for preserving non-equilibrium primary liquid and chemical products and minimizing secondary reactions that produce low-value equilibrium products such as char, coke, heavy tars and non-condensible gases.

A high-efficiency solids separation and recirculation system (typically a cyclone design) removes the particulate solid heat carrier and oversize solid products from the non-condensible gas and primary product vapour stream and returns the heat carrier to the mixer section in the reactor base. A control valve is positioned in the solids return line to ensure that no appreciable reverse flow occurs up the recirculation line.

In accordance with the present invention there is provided a rapid thermal processing reactor comprising:
a) an elongated conduit reactor;
b) a mixing section located below the conduit reactor with entry ports for injection of a carbonaceous feedstock with or without a non-oxidative transport gas;
c) one or several ports below the mixing section for entry of a particulate hot solids stream;
d) a reacting zone within the reactor above the mixing zone through which the turbulent entrained heat carrier solids and reacting feedstock flow;
e) an outlet port above the reaction zone connecting to a high efficiency solids separation system (typically a reverse flow cyclone) for separation of the heat carrier solid and oversize solid product from the non-condensible gases and product vapours;
f) a downflow conduit to convey the heat carrier solids from the solids separator (e.g. cyclone) to the base of the mixing section, fitted with an appropriate control valve to ensure return flow to the mixing section of the reactor;
g) a section at the base of the mixing zone to accelerate the particulate hot solids into the mixing zone, and where necessary, a constriction in the mixing zone (ie. a "throat" or reduction in mixing zone diameter) to further accelerate the hot solids and feedstock, thereby causing increased turbulence, mixing and heat transfer.

In addition there is a process for the fast thermal and \or catalytic processing of carbonaceous materials comprising:
a) rapidly mixing a stream of carbonaceous materials with a particulate hot solids heat carrier stream and a non-oxidative carrier gas stream;
b) subjecting the stream of carbonaceous material to thermal and \or catalytic conversion reactions within an elongated upflow transport reactor;
c) controlling the reaction time to ensure a very short uniform residence time essential for preserving non-equilibrium primary decomposition products;
d) separating the heat carrier solids from the non-condensible gas and primary vapour product stream and recirculating the solids to the mixing section;
e) rapidly quenching the primary vapours to ensure maximum yields of total liquids, petrochemicals and selected chemicals.

The upflow transport reactor of the present invention involves the combination of an upflow entrained bed transport reactor system (with hot solids heat carrier), a downflow recirculation of the heat carrier solids and a means for quickly and thoroughly mixing the heat carrier solids with the carbonaceous feedstock. The resultant process accomplishes the following:
1) extremely rapid heat transfer from the solid heat carrier to the carbonaceous reactants such that the reactants reach the desired reaction temperature in a fraction of the overall desired residence time;
2) precise control of a uniform, very short residence time such that maximum non-equilibrium yields of total liquids or selective maximum yields of individual chemicals, fuels or classes of chemicals are achieved;
3) excellent particle ablation such that undesirable secondary reactions within the reacting particle are minimized to limit production of heavy secondary tars and solid residue products (char, coke, carbon fines);
4) very limited back-mixing such that the residence time distribution is narrow and secondary reactions are minimal;
5) a controlled elevated temperature;
6) a configuration amenable to rapid product quench;
7) means for effective recycling of the hot solid heat carrier.

This configuration overcomes the residence time constraints associated with fluidized-beds. Not only are uniform residence times below the minimum possible for a fluidized-bed achieved, but these very low residence times can readily be maintained in large commercial-scale reactors.

The upflow entrained bed reactor with heat carrier solids recycle of the present invention may appear to be similar to that of classical circulating fluidized-beds (CFB's) which have been applied commercially to combustion, gasification, and calcining. however, there are many significant fundamental differences:
1) Classical CFB applications are oxidative (partial or complete combustion) processes. In contrast fast pyrolysis is a non-oxidative process, i.e., the chemical reactions take place in the absence of oxygen.
2) CFB applications utilize an equilibrium process designed to carry the reaction to completion. In contrast, fast pyrolysis seeks to preserve non-equilibrium intermediates. In other words, once equilibrium conditions are reached in the CFB there is no further change in the product distribution and extended residence times do not adversely affect the desired product yields. This is in stark contrast to fast pyrolysis where extended residence time will severely alter the yields of desirable non-equilibrium intermediate products.
3) Since classical CFB's are designed to yield equilibrium products, there is no requirement for strict control of a uniform, very short residence time as in fast pyrolysis processes. In turn this means that:
   - particle ablation is not essential since secondary reaction products resulting from lack of ablation will subsequently be converted to the desired final equilibrium products;
   - there is no strict requirement to achieve extremely rapid mixing of the heat carrier solids with the reactants since extremely high heat transfer rates are not essential (extended residence time allows a greater period for adequate heat transfer to occur);
   - the height of the exit to the solids recirculation system (typically a cyclone), above the mixing section is not a critical design variable in classical CFB's since minimum residence time is not a constraint. For a fast pyrolysis application, a balance must be struck between short residence time (minimum height above the mixer) and the minimum height required to avoid cyclone flooding.
4) Since classical CFB applications are oxidative, the heat supplied by the solid heat carrier can be significantly supplemented via combustion in the reaction zone. In contrast, combustion in the reaction zone must be avoided in fast pyrolysis; therefore, the entire heat demand in the mixing and reaction zones must be supplied by the hot solids stream alone.
5) In classical CFB applications there is no design intent to produce a liquid product which simplifies the separation of recirculation solids from the product gases. In contrast, fast pyrolysis processes are often designed to maximize the production of liquids which imposes severe constraints on the separation of recirculation solids from the condensible vapours to ensure that desirable liquid product is not lost to the solid recirculation stream.
6) Other than mechanical limitations to ensure continuous flow, there are no restrictions with regard to prevention of pre-pyrolysis reactions in the feed system associated with classical CFB's. In contrast, pre-pyrolysis cannot be allowed to occur in the feed system of fast pyrolysis reactors since this would significantly alter the final product distribution.
7) In classical CFB's, a fresh external supply of an inexpensive gas (typically, air) is continually introduced to the reactor to transport the solids through the bed. In a fast pyrolysis reactor system, the carrier gas entering the mixing and reaction zones must be non-oxidative, and typically the only inexpensive supply of carrier gas is a recycled portion of the non-condensible product gases. Consequently, provision must be made to effectively treat the product gas stream to render it suitable for recirculation.

It is obvious from the previous discussion that the following problems which exist with the classical CFB's must be addressed and overcome if an upflow, entrained-bed, transport reactor with solids recirculation is to be effectively applied to the fast pyrolysis of carbonaceous feedstocks:
1) a very short, uniform, controlled residence time;
2) extremely rapid, thorough mixing in the mixing section to ensure very high heat transfer rates;
3) adequate heat supply and transfer to the reaction zone via only the circulating particulate solid heat carrier;
4) avoidance of cyclone flooding while achieving minimum desirable reactor residence times;
5) a very high degree of particle ablation;
6) non-oxidative conditions in the reaction zone;
7) effective separation of the condensible vapour products from the heat carrier solids without loss of the condensed vapours to the solids recirculation stream;
8) cleaning and recycle of a portion of the non-condensible product gases for use as a transport medium;
9) prevention of pre-pyrolysis in the feed system.

The present invention has overcome each of the above problems in the design of a new Fast pyrolysis reactor.

### BRIEF DESCRIPTION OF THE DRAWINGS

Details of embodiments of the invention are described by reference to the accompanying drawings:
Figure 1 is a schematic representation of a fast pyrolysis flow system for the fast pyrolysis of a carbonaceous feedstock employing the reactor of the present invention.
Figure 2 is a drawing of one embodiments of the reactor of the present invention.
Figure 3 is one embodiments of the mixing section of the reactor.
Figure 4 is an alternative embodiment of the mixing section of the reactor.
Figure 5 is a drawing of an alternative embodiment of the reactor.
Figure 6 is a drawing of a second alternative embodiment of the reactor.

### DETAILED DESCRIPTION OF PREFERRED EMBODIMENT

In the following description the corresponding elements as shown in each figure of the drawings are given the same reference number.

The major components of the upflow, entrained-bed, transport reactor fast pyrolysis system, with recirculation of the heat carrying particulate solids (hereafter referred to as the circulating-bed transport reactor system), are designed to achieve a relatively high temperature within a minimum amount of time as well as having a relatively short residence time at that temperature to effect fast pyrolysis of a carbonaceous feedstock. Rapid cooling or quenching of the products is required in order to preserve the yields of the valuable non-equilibrium products.

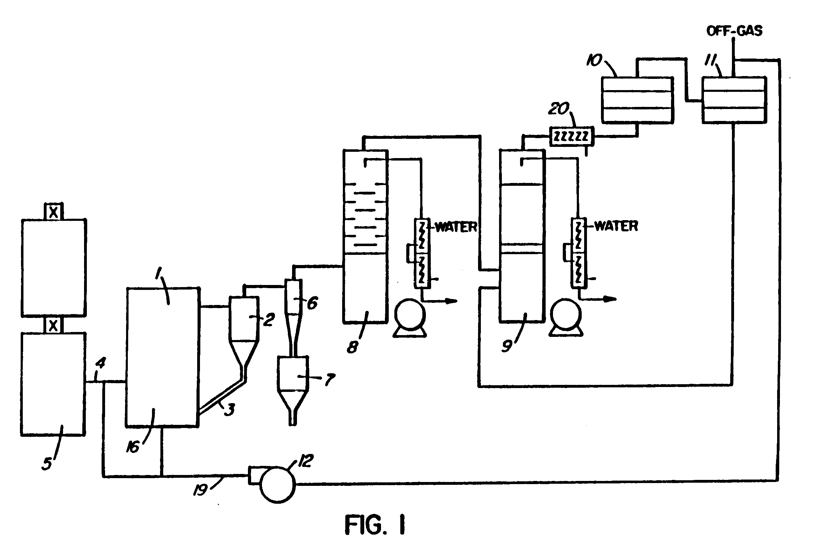

Referring now to Figure 1, the heat required to drive the pyrolysis process is transferred to the mixing and reaction zones (1, 15, 16) principally by recirculated hot particulate catalytic or inert solids.

There is no oxidation (combustion) occurring in the mixing and reaction zones to supply direct process heat. Direct or indirect combustion of char or gas, or externally supplied fuel, or indirect electrical resistance heating ,may be employed to heat the recirculated solids before they are injected into the mixing section (16). Direct combustion of the char may occur in the solids recirculation line (outside of the mixing and reaction zones). Alternatively, or as a supplement, process heat can be supplied by direct combustion of the recirculation gas in the plenum (18) or in a gas burner situated in the recirculation gas line (19). Indirect heating can be supplied by combustion of the recirculation gas or an externally-supplied fuel within fire rods, or by electrical resistance heating rods, located within the reheat zone (17).

The major components of the fast pyrolysis apparatus, incorporating the circulating-bed transport reactor system (upflow entrained-bed transport reactor system), are illustrated in Figure 1. These are cyclonic hot solids recirculation system (2,3), cyclonic separator (6,7), quenching system and liquid recovery (8, 9), gas recirculation and feed system (10,11,12) and feed system (4, 5).

Rapid mixing of the particulate solid heat carrier and the carbonaceous feedstock, and heat transfer to the carbonaceous feedstock are carried out in the mixing section (16) of the transport reactor (1). In the mixing section, heat is transferred from a particulate inert or catalytic solid, and gaseous heat carrier to a carbonaceous feedstock (ie. in the form of a particulate solid, atomized particles, vapour, gas or liquid stream). Thorough mixing and rapid heat transfer typically occur within 10% of the desired overall transport reactor system residence time. Therefore, the mixing time is typically less than 0.10 seconds, and preferably within 0.015 to 0.030 seconds. The heating rate of the feedstock should be greater than 1000°C per second.

The use of a particulate solid heat carrier as compared to a gaseous heat carrier, greatly enhances heat transfer because of the higher heat carrying capacity of the solids (per unit mass), and the ability of solids to mechanically ablate the surface of the reacting carbonaceous feedstock. In addition, much higher heat transfer rates to a carbonaceous feedstock are possible using direct contact with a turbulent hot particulate solid than would be possible with indirect heat transfer through a reactor wall.

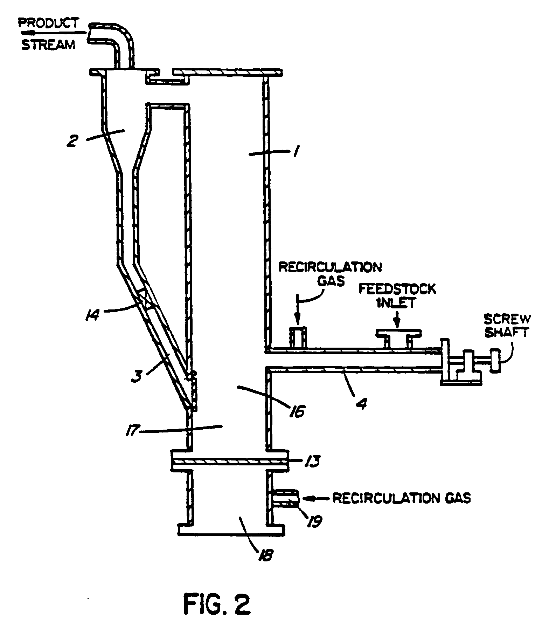

As shown in Figure 2 the rapid mixing/heat transfer operations of the thermal mixer section (16) are distinct from the operation of the upflow transport reactor section (1). This allows for precise control of the total reaction residence time since the time for heat transfer/mixing is a relatively small fraction of the net residence time. The total residence time in the reactor system [i.e. thermal mixing section (16) and upflow transport section (1)] is typically in the range of 0.10 to 0.90 seconds.

A bubbling, fluidized bed, for example, can accomplish the requisite heat transfer, but there is very limited control of the residence time, and the residence time distribution is broad with a significant portion of the reactants remaining in the reactor for a period longer than the average residence time. In addition, the minimum residence time possible in a fluidized bed is often above the optimum residence time for maximum yields of total liquids, petrochemicals, or specific chemical products. A conventional transport or plug-flow reactor (i.e. without a mixing section), on the other hand, can offer fine control of the residence time, but the heat transfer rate is limited.

Unlike a bubbling or "dense-phase" fluidized bed, the circulating-bed transport reactor of the present invention is operated with sufficiently high superficial velocities (typically greater than 2 metres per second) such that all of the reactor material is transported out of the reactor system. Relatively little back-mixing occurs, and both the solid and vapour phase residence time distributions are narrow (the residence time is relatively uniform). After turbulent mixing, the operation of the transport reactor section closely resembles that of a plug-flow reactor. This feature allows precise control of the system to achieve a desired uniform average residence time.

After injection into the base of the reactor system, the fast pyrolysis of the carbonaceous feedstock is initiated in the thermal mixer (16) and continues in the transport reactor (1). The solid and gaseous heat carrier, along with the product vapours and char are carried out of the transport reactor (1) to the hot solids recirculation system (2). In this recirculation system, typically a reverse flow cyclone, the solids are removed from the vapour-phase stream which consists of the transport gas, non-condensible product gases and the primary condensible vapour products. The particulate solids are reheated and returned to the mixing section (16) of the reactor system via a solids recirculation line (3). Alternatively, heating of the solids can occur at the base (17) of the reactor system (i.e. below the mixing section where heat transfer rates remain high) as long as a non-combustion heat source is employed.

The exit from the reactor system to the hot solids recirculation system (typically the inlet to a reverse flow cyclone) is positioned to achieve the desired minimum residence times without flooding the separation/recirculation system. The solids recirculation line is equipped with a flow-restriction device (14) to ensure that no appreciable quantities of particulate solid heat carrier, transport gases, product gases and vapours, or solid carbonaceous materials are blown back into the hot solids recirculation system.

The non-condensed product vapours, non-condensible product and transport gases, and solid particulate fines, exit from the primary hot solids recirculation system (typically a reverse-flow cyclone) to a secondary high-efficiency cyclone (6) where the char, fine ash and attrited bed materials are removed from the vapours and gases, and deposited in a solids catchpot (7). These separated solids are then removed from the char catchpot through a lock valve. Both the primary and secondary solid separation systems are heat traced to ensure that the temperature of the product stream does not fall below a specified temperature (typically the same as the reactor temperature).

The hot product stream (condensible and non-condensible product) from the secondary separator is immediately quenched and condensed by cooled recycled liquid (either the liquid product or some other suitable liquid solvent), in a primary condenser, typically a direct-contact condenser column (8). The condensed, warm liquid is drawn from the bottom of the primary condenser by a pump, and transported to a heat exchanger column for further cooling. The cooled liquids are then sprayed back into the top of the primary condenser column. Residual vapour products which are not condensed in the primary column are further cooled in a secondary condenser, typically a direct-contact packed condenser column (9). Cooled, condensed liquid product is drawn from the bottom of the secondary condenser column and circulated through a secondary heat exchanger column. The gas stream exiting from the top of the secondary condenser packed column undergoes final cooling in a heat exchanger (20).

Persistent aerosols (organic fog) which escape collection , are removed in a demister (10) and filter vessel (11) or suitable scrubbing system. A portion of the product gas stream is then compressed in a gas blower (12) and recirculated to the reactor to transport the feedstock, solid particulate heat carrier and products through the reactor system. Any small fraction of aerosols which are not collected by the demister and filter, may deposit in the gas recirculation blower where they are removed periodically via a solvent wash (typically sodium hydroxide).

The heat necessary for fast pyrolysis reactions is transferred to the reactants by hot particulate solids. The heating of the solids, in turn, can be accomplished by several methods (and combinations of methods):
- direct heating of the solids, via the addition of air to the solids, outside of the reactor system and just prior to their re-entry into the mixing zone, thereby combusting the oversize char and carbon adhered to the surface of the solid heat carrier.
- indirect heating of the solids via reactor system and transfer lines.
- indirect heating of the solids by heating the recirculation gas stream via external combustion of a portion of the char or gas products or other fuels in the plenum (18), gas recirculation line (19) or some other suitable external burner.
- direct heating of the heat carrier solids via electrical resistance or internally-fired heating rods submerged in the dense-phase preheat zone (17), below the mixing section (16) of the reactor system.

As stated previously, either liquid (fluid) solid or gaseous carbonaceous feedstocks can be processed in the circulating-bed transport reactor fast pyrolysis system. The feed system will vary depending on the nature of the feedstock used. The feeding of non-condensible gases or vaporized liquids is straightforward and requires no special feeding mechanism. An atomization feed system is required for liquid feedstock, while a mechanical, pneumatic or combined mechanical/pneumatic feed system is required for solids. An example of a solids feeder system is shown in Figure 1, where a lock hopper system (5) is used to deliver a solid carbonaceous feedstock to the reactor feed screw (4). An auger in the bottom of the feed bin meters the carbonaceous material to the feeder screw, which is assisted by a carrier gas to inject the feed into the mixing section of the reactor.

A preferred circulating bed, transport reactor arrangement is shown in Figure 2. This system utilizes the upward momentum and turbulence of the hot recirculating solid stream or streams to transfer heat to the injected carbonaceous material. Solid carbonaceous material is injected by combined mechanical/pneumatic means using a rotating screw and transport gas injected near the outlet of the reactor screw (4). The transport gas is typically a fraction of the recirculated gas product. With this feeding technique, mixing and heat transfer in the mixing zone an enhanced. The addition of relatively cool recirculated product gas to the reactor screw tube, also serves to maintain the temperature of the carbonaceous feedstock at a level where no prepyrolysis can occur. Alternatively, mechanical feed systems may be selected and used which require no pneumatic flow to assist in feeding (for example, a ram plug feeder).

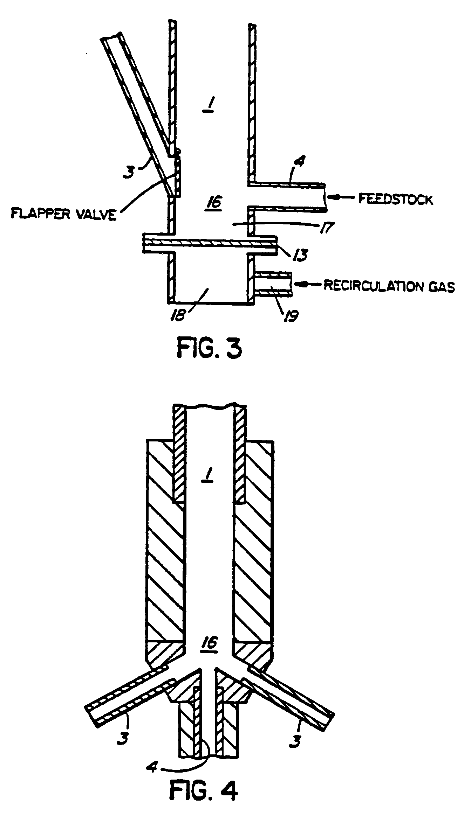

Figure 3 shows one arrangement for the mixing section of the reactor. The mixing section (16) allows rapid transfer of heat from a hot particulate solid heat carrier to a solid particulate carbonaceous feedstock or an atomized liquid carbonaceous feedstock. Mixing and heat transfer typically occur within 0.10 seconds in the thermal mixer and preferably within 0.005 to 0.030 seconds. The heating rate of the feedstock should be greater than 1000 °C per second. Particle size of the carbonaceous feedstock is usually less than 6 mm for solids and typically less than 1 mm for atomized liquids. Typically, the heat carrying solids are inert silica sand or alumina-silica catalyst with a mean particle size in the range of 40 to 500 microns.

The rapid turbulent mixing\heat transfer function of the thermal mixer section (16) is distinct from the function of the transport reactor (1) in that a dense phase exists within the mixer section while a dilute phase exists within the transport reactor section. This allows precise control of the total reaction residence time since the time for heat transfer/mixing is a relatively small fraction of the net residence time, typically less than 20% and preferably less than 10%. The total residence time in the reactor system (i.e. thermal mixer and transport reactor) is typically in the range of 0.05 to 0.90 seconds.

Solid feedstock injection is by a mechanical feeder (4), typically a screw auger, at one or several radial injection locations. Performance of the feeder can be pneumatically enhanced by injection of an inert gas, typically a portion of cooled recycle product gas. This serves to increase the entry velocity of the feedstock particles thereby achieving improved penetration into the mixing area while cooling the feedstock thereby preventing prepyrolysis. Use of the inert gas prevents product vapours from backflowing into the feedstock delivery system. The injector tubes can also incorporate air or water cooling jackets to further retard preheating of the feedstock.

The particulate heat carrier solids are introduced to the mixer section by pneumatic flow through one or more entry positions in close proximity to the feedstock entry ports. The ratio of the heat carrier mass flowrate to that of the carbonaceous feedstock depends on the thermal requirements of the system which, in turn, depend on the nature of the feedstock and the desired reaction temperature. This ratio is typically between 1:1 and 200:1 and preferably in the range of 5:1 to 100:1. A flow restriction device located at the solids recirculation line (3) controls the rate of solids return to the mixer while preventing the reverse flow of heat carrier solids, transport gas, product gases and vapours or solid carbonaceous material.

The transport gas, typically an inert gas or a recirculated portion of the non-condensible product gases, is introduced to the reactor via a plenum chamber located below a gas distribution plate, typically a grid plate.

Figure 4 shows an alternative embodiment for the mixing section of the reactor. In this case, the mixing section of the reactor has converging inlets (3) for the solid heat carrier which is delivered from the hot solids recirculation system. The converging inlets focused on the axial carbonaceous feed inlet stream (4) and provide intimate contact and thorough mixing of the heat carrier and the feed material. This turbulence is ideal for rapid heat transfer. An angle of 60 degrees was chosen as the preferred angle for the introduction of the heat carrier jets to the central carbonaceous feedstock stream.

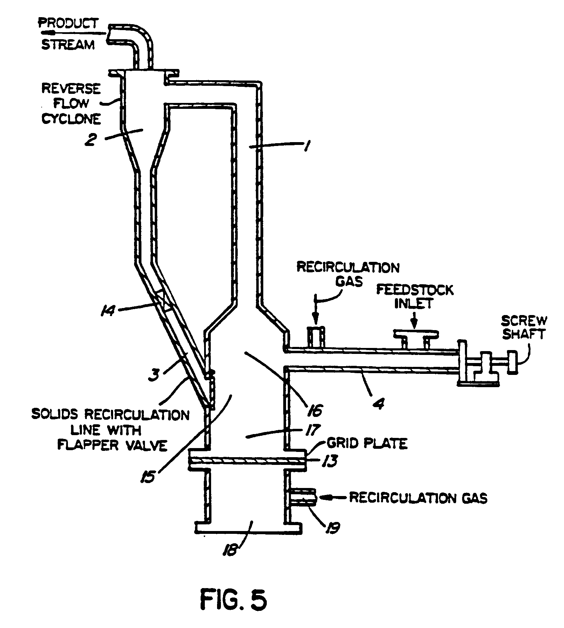

In Figure 5 an alternative arrangement of the circulating-bed transport reactor system is illustrated. In this case, a constriction section (21) is inserted into the reactor system between the mixing section (16) and the transport reactor section (1). The constriction angle is typically 25 to 60 degrees preferably 40 to 50 degrees. The constriction enhances the mixing and heat transfer characteristics of the system further, and combined with the corresponding reduction in transport section diameter (i.e. reduced reactor volume), allows operation at greatly reduced residence times below 0.10 seconds, if required.

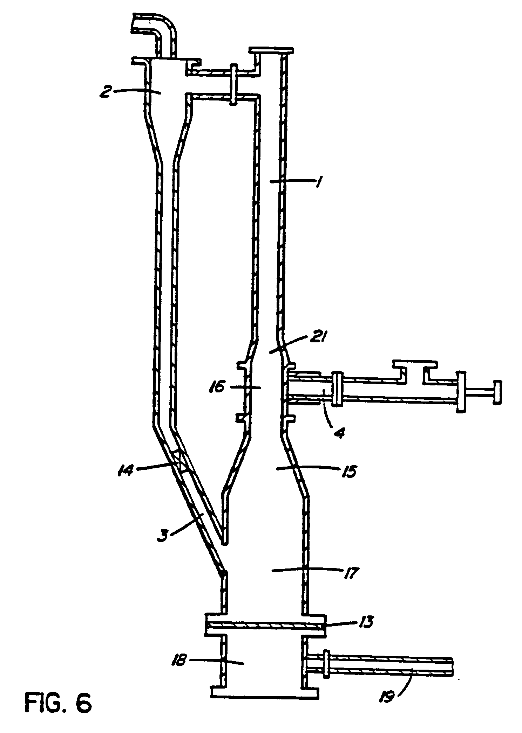

In Figure 6, a second alternative embodiment of the reactor is illustrated in Figure 5, but with the addition of a second constriction section (15) between the reheat zone (17) and the mixing section (16). This second constriction serves to further accelerate and concentrate the hot solid stream which in turn further enhances mixing and heat transfer in the mixing zone (16).

### EXAMPLES:

The circulating bed transport reactor of the present invention was run with the feedstocks set out below, and at the reaction temperatures indicated. The total liquid yields and gas yields produced were indicated and in addition a browning index of 5.5 was achieved. The browning index is a relative measure of the ability of carbonaceous materials to react with the aminoacid glycine. The browning index provides a good correlation of a solution of pyrolysis liquid to function as a smoke flavouring solution, as well as to indicate the extent of brown colour formation on food surfaces and it is known to those in the smoke flavouring industry.

### 1. Feedstock - wood (hardwood)

- Carbon Content: 48.5%
- Hydrogen Content: 6.2%
- Oxygen Content: 44.2%
- Ash Content: 0.6%

Reactor Temperature 520 °C
Residence Time 0.69 s
Run Time 12.0 hours
Total Liquid Yield: 72.5%
Gas Yield: 13.0%
Relative Browning Index: 5.5
By way of comparison at 520 °C using conventional slow pyrolysis, the relative browning index was 5.5 times higher, the total liquid yield was about 2.4 times higher and the char yield was 56% lower when the present invention was used for the fast pyrolysis of hardwood. In addition, the slow pyrolysis hardwood-derived liquid product is a relatively low-value secondary tar (ie. made up of constituents which have repolymerized and recondensed to form longer chain heavy compounds). This slow pyrolysis liquid is extremely viscous and very difficult to pour at room temperature. On the other hand, the fast pyrolysis liquid produced in Example 1 is made up of valuable, light components which are completely different from slow pyrolysis liquids with respect to their chemical composition and value. Fast pyrolysis liquids derived from hardwoods are very non-viscous and readily pour at room temperature.

Same apparatus of example 1 was run utilizing the following feedstocks and reaction temperatures residence times and run times, and provided the yield indicated.

### 2. Feedstock - wood (hardwood)

- Carbon Content: 48.5%
- Hydrogen Content: 6.2%
- Oxygen Content: 44.2%
- Ash Content: 0.6%

Reactor Temperature 500 °C
Residence Time 1.4 s
Run Time 15.0 hours
Total Liquid Yield: 70.0%
Gas Yield: 11.0%
Relative Browning Index: 3.5
By way of comparison at 500 °C using conventional slow pyrolysis, the relative browning index was 3.5 times higher, the total liquid yield was about 2.3 times higher and the char yield was 42% lower when the present invention was used for the fast pyrolysis of hardwood. As was the case in Example 1, the slow pyrolysis hardwood-derived liquid product was relatively low-value secondary tar. On the other hand, the fast pyrolysis liquid produced in Example 2 consists of valuable, light components which are completely different from slow pyrolysis liquids with respect to their chemical composition and value.

Same apparatus of example 1 was run utilizing the following feedstocks and reaction temperatures residence times and run times, and provided the yields indicated.

### 3. Feedstock - Lignin

- Carbon Content: 63.32%
- Hydrogen Content: 6.08%
- Oxygen Content: 33.35%
- Nitrogen Content: 0.27%

Reactor Temperature 550 °C
Residence Time 0.8 s
Liquid Yield 55%
Gas Yield 10.4%
Same apparatus of example 1, with the addition of a constriction section as in Figure 5, was run utilizing the following feedstock and reaction temperatures, residence times and run times, and provide the yields indicated.

### 4. Feedstock - wood (hardwood)

- Carbon Content: 48.5%
- Hydrogen Content: 6.2%
- Oxygen Content: 44.2%
- Ash Content: 0.6%

Reactor Temperature 520 °C
Residence Time 0.33 s
Run Time 5.0 hrs.
Total Liquid Yield: 78%
Gas Yield: 11.1%
Char Yield: 10.9%
Relative Browning Index: 6.0
By way of comparison with slow pyrolysis, the relative browning index was about 6 times higher, the total liquid yield was about 2.6 times higher and the char yield was 67% lower when the present invention was used for the fast pyrolysis of hardwood at 520 °C. As was the case in Example 1, the slow pyrolysis hardwood-derived liquid product was a relatively low-value secondary tar. On the other hand, the fast pyrolysis liquid produced in Example 4 consists of valuable, light components which are completely different from slow pyrolysis liquids with respect to their chemical composition and value.

## Claims

1. A process for the rapid thermal processing of carbonaceous material comprising:
a. introducing in the absence of oxygen a primary stream of carbonaceous material into an elongated cavity in a thermal process reactor having a secondary upwardly flowing stream of inorganic particulate heat supplying material, which converges with said primary stream;
b. subjecting the stream of carbonaceous material to the influence of the said heat supplying secondary inorganic particulate stream in the absence of oxygen to cause transformation of the carbonaceous material; and
c. separating the product stream from the inorganic particulate heat supplying material by separation means situated at the exit of the cavity such that the average residence time of contact between the carbonaceous material and the heat supply material is less than 1.0 second;
d. recirculating the inorganic particulate heat supplying material.
e. said separation means being connected to a recirculation line which has control means to control the direction of the flow of the particulate heat supplying material.
wherein the ratio of the mass of the inorganic particulate heat supplying material to the mass of carbonaceous feedstock is greater than 5:1.

2. A process as claimed in claim 1 where:
a. the heating rate of the carbonaceous material in mixing and reacting zone is greater than 1,000 °C per second;
b. the residence time of the carbonaceous material and the primary products in mixing and reacting zones is between 0.05 seconds and 0.90 seconds;
c. the temperature of the reacting zone is between 350° and 1000 °C; and
d. the temperature of the products is reduced after removal from the mixing and reacting zones to less than 300 °C in less than 0.1 seconds.

3. A process as claimed in claim 1 where the secondary stream is introduced through a plurality of spaced inlets.

4. A process as claimed in claim 1, 2 or 3 where the carbonaceous material is a particulate carbonaceous material, an atomized liquid, a vapour or a noncondensible gas.

5. A process as claimed in claim 1, 2 or 3 where the carbonaceous material is introduced as a liquid stream.

6. A process as claimed in claim 1, 2 or 3 where the carbonaceous material is ground wood, coal, heavy oil, petroleum derived liquids, a biomass derived liquid, a lignin, plastics or polymers, tires, a municipal solid waste (MSW), a refuse-dervied fuel (RDF) or industrial residues.

7. A process of claim 1, 2 or 3 wherein the control means consists of a control valve within the recirculation line.

8. An upflow, entrained-bed, transport reactor for the fast pyrolysis of carbonaceous material in the absence of oxygen comprising:
a. a mixing section including first inlet means for the introduction of heat carrying inorganic particulate solid and secondary inlet means for the introduction of carbonaceous material;
b. an upflow transport reactor section situated above said mixing section;
c. separation means at the outlet of the transport reactor section to separate, prior to cooling, the gaseous and liquid pyrolysis products from the heat carrying inorganic particulate solids; and
d. a gravity fed recirculating line to return the heat carrying particulate solids to the mixing section.

9. The reactor of claim 8 further comprising condensing means for cooling and condensing the liquid products of the pyrolysis.

10. The reactor of claim 8 or 9 further comprising control means in the recirculation line which controls the direction and rate of the flow of the inorganic particulate heat supply material.

11. The reactor of claim 8, 9 or 10 wherein the total residence time of the carbonaceous material at an elevated temperature in the reactor is less than 2.0 seconds.

12. The reactor of claims 8, 9 or 10 further including constricting means wherein the heat carrying inorganic particulate solids are concentrated to accelerate and concentrate the said particulate solids.

13. The process as claimed in any of claims 1 to 7, where the inorganic particulate heat supplying material comprises sand, sand and catalytic solids or an alumina-silica catalyst.

14. The reactor as claimed in any of claims 8 to 12 wherein the heat carrying inorganic particulate solids consist of sand or alumina-silica catalyst.

## Patentansprüche

1. Verfahren zur schnellen thermischen Verarbeitung von kohlenstoffhaltigem Material, welches die Schritte aufweist:
a) ein Primär-Strom von kohlenstoffhaltigem Material wird bei Abwesenheit von Sauerstoff in einen verlängerten Hohlraum in einem thermischen Prozeßreaktor eingeleitet, in dem ein aufwärts gerichteter Sekundär-Strom von anorganischen, teilchenförmigen, Hitze lieferndem Material vorhanden ist, der sich mit dem Primär-Strom vermengt;
b) der Strom aus kohlenstoffhaltigem Material wird dem Einfluß des die Hitze liefernden, sekundären anorganischen teilchenförmigen Stromes in der Abwesenheit von Sauerstoff ausgesetzt, um die Umwandlung des kohlenstoffhaltigen Materials herbeizuführen; und
c) der Produkt-Strom von dem anorganischen, teilchenförmigen, Hitze liefernden Material wird durch Abscheidungs-Mittel abgetrennt, die am Ausgang des Hohlraums so angeordnet sind, daß die durchschnittliche Verweilzeit des Kontakts zwischen dem kohlenstoffhaltigen Material und dem Hitze liefernden Material weniger als 1,0 Sekunde beträgt;
d) das anorganische teilchenförmigen, Hitze liefernde Material wird im Kreislauf zurückgeführt;
e) die Abscheide-Mittel mit einer sind Kreislauf-Rückführleitung verbunden, die Regelungs-Mittel aufweist, um die Strömungsrichtung des teilchenförmigen, Hitze liefernden Materials zu regeln;
wobei das Mengenverhältnis von dem anorganischen, teilchenförmigen, Hitze liefernden Material zu der Menge des kohlenstoffhaltigen Beschickungsmaterial größer als 5:1 ist.

2. Verfahren nach Anspruch 1, dadurch gekennzeichnet, daß:
a) die Erhitzungsgeschwindigkeit des kohlenstoffhaltigen Materials in der Misch- und Reaktionszone größer als 1.000°C pro Sekunde ist;
b) die Verweilzeit des kohlenstoffhaltigen Materials und der Primärprodukte in den Misch- und Reaktionszonen zwischen 0,05 Sekunden und 0,90 Sekunden beträgt;
c) die Temperatur der Reaktionszone zwischen 350°C und 1000°C liegt; und
d) die Temperatur der Produkte nach dem Verlassen der Misch- und Reaktionszonen auf weniger als 300°C in weniger als 0,1 Sekunden verringert wird.

3. Verfahren nach Anspruch 1, dadurch gekennzeichnet, daß der Sekundär-Strom durch ein große Anzahl von voneinander beabstandeten Einlässen eingeleitet wird.

4. Verfahren nach Anspruch 1, 2 oder 3, dadurch gekennzeichnet, daß das kohlenstoffhaltige Material ein teilchenförmiges kohlenstoffhaltiges Material, eine zerstäubte Flüssigkeit, ein Dampf oder ein nicht-kondensierbares Gas ist.

5. Verfahren nach Anspruch 1, 2 oder 3, dadurch gekennzeichnet, daß das kohlenstoffhaltige Material als ein Flüssigkeitsstrom eingeleitet wird.

6. Verfahren nach Anspruch 1, 2 oder 3, dadurch gekennzeichnet, daß das kohlenstoffhaltige Material folgendes sein kann: Holzmasse, Kohle, Schweröl, flüssige Petroleumderivate, flüssiges Biomassenderivat, Lignin, Kunststoffe oder Polymere, Reifen, städtischer Feststoffmüll (municipal solid waste - MSW), vorbehandelter, als Verbrennungsmaterial dienender Müll (refuse-derived fuel - RDF) oder Industrieabfall.

7. Verfahren nach Anspruch 1, 2 oder 3, dadurch gekennzeichnet, daß die Regelungs-Mittel von einem Regelventil innerhalb der Kreislauf-Rückführleitung gebildet sind.

8. Aufwärts-Flugstrom-Transportreaktor zur schnellen Pyrolyse von kohlenstoffhaltigem Material bei Abwesenheit von Sauerstoff, der aufweist:
a) einen Mischabschnitt mit ersten Einlaß-Mitteln für die Einleitung von Hitze transportierenden, anorganischen, teilchenförmigen Feststoffen und mit zweiten Einlaß-Mitteln zur Einleitung von kohlenstoffhaltigem Material;
b) einen oberhalb des Mischabschnitts angeordneten Aufwärtsstrom-Transportreaktorabschnitt;
c) Abscheide-Mittel am Ausgang des Transportreaktorabschnitts zum Abscheiden der gasförmigen und flüssigen Pyrolyseprodukte von den die Hitze transportierenden, anorganischen, teilchenförmigen Feststoffen vor dem Abkühlen ; und
d) einer durch Schwerkraft wirkenden Kreislauf-Rückführleitung zum Zurückführen der die Hitze transportierenden, teilchenförmigen Feststoffe zum Mischabschnitt.

9. Reaktor nach Anspruch 8, dadurch gekennzeichnet, daß er außerdem Kondensations-Mittel zum Kühlen und Kondensieren der flüssigen Pyrolyseprodukte aufweist.

10. Reaktor nach Anspruch 8 oder 9, dadurch gekennzeichnet, daß er außerdem in der Kreilauf-Rückführleitung Regelungs-Mittel aufweist, die die Richtung und Geschwindigkeit des Flusses des anorganischen, teilchenförmigen, Hitze liefernden Materials regeln.

11. Reaktor nach Anspruch 8, 9 oder 10, dadurch gekennzeichnet, daß die gesamte Verweilzeit des kohlenstoffhaltigen Materials bei einer erhöhten Temperatur im Reaktor weniger als 2,0 Sekunden beträgt.

12. Reaktor nach Anspruch 8, 9 oder 10, dadurch gekennzeichnet, daß er außerdem Verengungs-Mittel aufweist, in denen die die Hitze transportierenden, anorganischen, teilchenförmigen Feststoffe zusammengedrängt werden, damit diese teilchenförmigen Feststoffe beschleunigt und konzentriert werden.

13. Verfahren nach einem der Ansprüche 1 bis 7, dadurch gekennzeichnet, daß das anorganische, teilchenförmige, Hitze liefernde Material Sand, Sand und katalytische Feststoffe oder ein Tonerde-Kieselerde-Katalysator umfaßt.

14. Reaktor nach einem der Ansprüche 8 bis 12, dadurch gekennzeichnet, daß die die Hitze transportierenden, anorganischen, teilchenförmigen Feststoffe aus Sand oder einem Tonerde-Kieselerde-Katalysator bestehen.

## Revendications

1. Procédé de traitement thermique rapide d'une matière carbonée, comprenant les étapes consistant à:
a. introduire en l'absence d'oxygène un courant primaire de matière carbonée dans une cavité allongée d'un réacteur de traitement thermique où existe un courant secondaire ascendant de matière inorganique en particules fournissant de la chaleur, qui converge avec ledit courant primaire;
b. soumettre le courant de matière carbonée à l'influence dudit courant secondaire de particules inorganiques fournissant de la chaleur en l'absence d'oxygène afin de provoquer une transformation de la matière carbonée;
c. séparer le courant de produit de la matière inorganique en particules fournissant la chaleur par un moyen de séparation situé à la sortie de la cavité d'une manière telle que le temps moyen de séjour pour le contact entre la matière carbonée et la matière fournissant la chaleur est inférieur à 1,0 seconde;
d. recycler la matière inorganique en particules fournissant la chaleur;
e. ledit moyen de séparation étant relié à une ligne de remise en circulation qui inclut un moyen de réglage pour régler la direction de l'écoulement de la matière en particules fournissant la chaleur,
dans lequel le rapport entre la masse de la matière inorganique en particules fournissant la chaleur et la masse de la charge d'alimentation carbonée est supérieur à 5:1.

2. Procédé selon la revendication 1, dans lequel:
a. la vitesse d'échauffement de la matière carbonée dans la zone de mélange et de réaction est supérieure à 1000 °C par seconde;
b. le temps de séjour de la matière carbonée et des produits primaires dans les zones de mélange et de réaction est comprise entre 0,05 seconde et 0,90 seconde;
c. la température de la zone de réaction est comprise entre 350°C et 1000 °C; et
d. la température des produits est abaissée après leur enlèvement des zones de mélange et de réaction, à moins de 300 °C en moins de 0,1 seconde.

3. Procédé selon la revendication 1, dans lequel le courant secondaire est introduit par une pluralité d'entrées espacées.

4. Procédé selon la revendication 1, 2 ou 3, dans lequel la matière carbonée est une matière carbonée en particules, un liquide atomisé, une vapeur ou un gaz non condensable.

5. Procédé selon la revendication 1, 2 ou 3, dans lequel la matière carbonée est introduite sous forme de courant liquide.

6. Procédé selon la revendication 1, 2 ou 3, dans lequel la matière carbonée est du bois broyé, du charbon, une huile lourde, des liquides dérivés du pétrole, un liquide dérivé d'une biomasse, une lignine, des plastiques ou des polymères, des pneumatiques, des déchets municipaux solides (MSW), un carburant dérivé de rebuts (RDF) ou des résidus industriels.

7. Procédé selon la revendication 1, 2 ou 3, dans lequel le moyen de réglage consiste en une vanne de réglage disposée à l'intérieur de la ligne de remise en circulation.

8. Réacteur de transport à courant ascendant et à lit entraîné, pour la pyrolyse rapide d'une matière carbonée en l'absence d'oxygène, comprenant:
a. une section de mélange incluant un premier moyen d'entrée pour l'introduction d'un solide inorganique en particules transportant la chaleur et un moyen d'entrée secondaire pour l'introduction de matière carbonée;
b. une section de réacteur à transport à courant ascendant située au-dessus de ladite section de mélange;
c. un moyen séparateur à la sortie de la section du réacteur de transport afin de séparer, avant le refroidissement, les produits gazeux et liquides de pyrolyse, des solides en particules inorganiques portant la chaleur; et
d. une ligne de remise en circulation alimentée par gravité afin de ramener à la section de mélange les solides en particules portant la chaleur.

9. Réacteur selon la revendication 8, comprenant en outre un moyen de condensation pour refroidir et condenser les produits liquides de la pyrolyse.

10. Réacteur selon la revendication 8 ou 9, comprenant en outre, dans la ligne de remise en circulation, un moyen de réglage qui règle la direction et le débit de l'écoulement de la matière inorganique en particules fournissant la chaleur.

11. Réacteur selon la revendication 8, 9 ou 10, dans lequel le temps total de séjour de la matière carbonée à une température élevée dans le réacteur est inférieur à 2,0 secondes.

12. Réacteur selon la revendication 8, 9 ou 10, incluant en outre un moyen d'étranglement dans lequel les solides inorganiques en particules transportant la chaleur sont concentrés de manière à accélérer et à concentrer lesdits solides en particules.

13. Procédé selon l'une quelconque des revendications 1 à 7, dans lequel la matière inorganique en particules fournissant la chaleur comprend du sable, du sable et des solides catalytiques ou un catalyseur alumine-silice.

14. Réacteur selon l'une quelconque des revendications 8 à 12, dans lequel le solide inorganique en particules transportant la chaleur consiste en sable ou en un catalyseur alumine-silice.
